Europäisches Patentamt

European Patent Office

Office européen des brevets

(19)

(11) Veröffentlichungsnummer: **0 147 530**
**B1**

(12) EUROPÄISCHE PATENTSCHRIFT

(45) Veröffentlichungstag der Patentschrifft:
21.03.90

(51) Int. Cl.⁵: **B 62 D 65/00, B 23 K 37/04,**
**B 23 P 21/00, B 23 Q 41/00**

(21) Anmeldenummer: 84110554.7

(22) Anmeldetag: 05.09.84

(54) Verfahren zum Positionieren und zum Befestigen von flächigen Körpern im Raum an mindestens einem anderen Körper und Vorrichtung zum Durchführen des Verfahrens.

(30) Priorität: 25.11.83 DE 3342570

(43) Veröffentlichungstag der Anmeldung:
10.07.85 Patentblatt 85/28

(45) Bekanntmachung des Hinweises auf die Patenterteilung:
21.03.90 Patentblatt 90/12

(84) Bennante Vertragsstaaten:
AT BE CH FR GB IT LI LU NL SE

(56) Entgegenhaltungen:
EP-A-0 067 882
EP-A-0 072 277
EP-A-0 090 354
DE-A-2 706 952
FR-A-1 390 177
GB-A-2 059 303

PATENT ABSTRACTS OF JAPAN, Band 3, Nr. 33, 20. März 1979, Seite 26 M 52; & JP-A-54-5276 (NISSAN JIDOSHA K.K.) 16-01-1979

idem

PATENT ABSTRACTS OF JAPAN, Band 5, Nr. 183, 21. November 1981, Seite (M-97) (885); & JP-A-56-103669 (DAIFUKU KIKO) 18-08-981

PATENT ABSTRACTS OF JAPAN, Band 5, Nr. 183, 21. November 1981, Seite (M-97) (885); & JP-A-56-103668 (DAIFUKU KIKO) 18-08-85

(73) Patentinhaber: Thyssen Maschinenbau GmbH Nothelfer-Ravensburg
Bleicherstrasse 7
D-7980 Ravensburg (DE)

(72) Erfinder: Jäck, Kurt
Bändelstockweg 4
D-7960 Aulendorf (DE)

(74) Vertreter: Beyer, Rudl
Patentanwalt Dipl.-Ing. Rudi Beyer Am Dickelsbach 8
Postfach6160
D-4030 Ratingen 6 (Hösel) (DE)

(56) Entgegenhaltungen (fortsetzung):
PATENT ABSTRACTS OF JAPAN, Band 5, Nr. 97, 24. Juni 1981, Seite (M-75) (769); & JP-A-56-043069 (DAI FUKU KIKO) 21-04-1981

PATENT ABSTRACTS OF JAPAN, Band 2, Nr. 80, 24: Juni 1978, Seite 2172 M 78; & JP-A-53-049785 (TOYOTA) 06-05-1978

FÖRDERN UND HEBEN, 1964, Heft 4, Seiten 339-340

**Beschreibung**

Die Erfindung betrifft ein Verfahren zum Positionieren und zum Befestigen von flächigen Körpern im Raum an mindestens einem anderen Körper, insbesondere zum Positionieren und anschließendem Befestigen von Teilen an einer Kraftfahrzeug-Karosserie, wobei der flächige Körper an den anderen Körper heranbewegt und während eines Teiles dieser Bewegung über mindestens einen Abstandsfinger seine Lage zu dem anderen Körper bestimmt wird, wobei der flächige Körper in drei Freiheitsgraden bis zum körperlichen Kontakt zu dem anderen Körper weiterbewegt wird und daraufhin in zwei verschiedenen Ebenen an einem einstückigen Teil des flächigen Körpers die Lage im Raum bestimmt, insbesondere ertastet wird, und daß die ertasteten Werte an einen Rechner weitergegeben werden, der die zum Durchführen der Befestigungsarbeit für den flächigen Körper und/oder dessen damit einstückig verbundenen Teil weitergegeben werden, woraufhin ein Industrieroboter das betreffende Teil mit dem anderen Körper verbindet.

Des weiteren betrifft die Erfindung eine Vorrichtung zum Positionieren und zum Befestigen von Kraftfahrzeug - Türen an einer Kfz.-Karosserie nach diesem Verfahren.

Es ist bekannt, bei der Herstellung von Kraftfahrzeugen die Scharniere von Türen manuell anzuschweißen oder anzuschrauben.

Beides ist unter den heutigen Wettbewerbsverhältnissen unwirtschaftlich.

Außerdem lassen sich beim manuellen Anordnen von Kraftfahrzeugtüren, Kofferraumdeckeln, Motorraumdeckeln o. dgl. Einbaufehler niemals ganz ausschließen, weil die Anordnung und Befestigung dieser Teile von der Sorgfalt der damit beauftragten Personen abhängig ist.

Durch die EP-A-072 277 ist ein Verfahren zum automatischen Einbau von Fensterelementen wie z. B. Windschutzscheiben, hinteres Fenster oder eines Himmels vorbekannt, wobei ein Greifer den anzumontierenden Gegenstand ergreift und ihn über eine Laufkatze in eine Einbauposition bringt. Durch Meßfühler werden die Laufkatze und die Halterung so gesteuert, daß der anzumontierende Gegenstand in die zweckentsprechende Position gelangen. Hiermit ist es jedoch nicht möglich, flächige Elemente wie Autotüren, Kofferraumdeckel oder Motorraumabdeckungen in die genaue Lage zu bringen und die zum Befestigen solcher Teile notwendigen Lager wie Laschen und dergleichen zu befestigen, ohne daß menschlicher Eingriff erforderlich ist.

Die FR-A-1 390 177 betrifft eine Vorrichtung, bei der waagerecht auf einem Förderband transportierte Glasbänder aufgenommen werden und diese senkrecht auf einen zweiten Förderer abgesetzt werden, der unabhängig von dem ersten Förderer angetrieben ist. Hierzu werden Saugarme verwendet.

Das Heranfördern von Teilen zu einer Automobilkarosserie und deren Befestigung ist mit dieser Vorrichtung nicht möglich.

Durch die DE-Z. "fördern und heben" 1964, H. 4, Seiten 339 bis 340 ist es bekannt, Autotüren, die schon mit den Führungsschienen für die Fenster und mit dem Werk für ihre Betätigung ausgerüstet sind, automatisch einzuhängen. Der Arbeiter soll eine Tür in die Vorrichtung stellen und drückt eine Taste. Wenn die Karosserie bis auf eine festgelegte Entfernung herangekommen ist, schwenkt die Vorrichtung um eine senkrechte Achse etwa um 45 Grad und zieht mit gleicher Geschwindigkeit mit dem Förderer mit. Die beiden Gelenkhälften werden mit denen am Türpfosten ausgerichtet. Dann schieben Stempel die Gelenkbolzen ein. Anschließend fährt die Vorrichtung wieder in die Arbeitsstellung zurück. Auch aus dieser Vorrichtung ist es nicht bekannt, einen flächigen Körper wie eine Tür mit ihren Scharnieren an die Türpfosten automatisch heranzuführen und zu befestigen. Vielmehr beschreibt diese vorbekannte Vorrichtung den Zusammenbau von Teilen, die bereits vorher hergestellt wurden, und zwar manuell.

Der Erfindung liegt die Aufgabe zugrunde, ein Verfahren gemäß dem Oberbegriff des Patentanspruches 1 so auszugestalten, daß es mit ihm vollkommen automatisch möglich ist, eine Tür an eine Karosserie eines Kraftfahrzeuges automatisch heranzuführen und diese Tür ohne jeglichen menschlichen Eingriff dort zu befestigen.

Des weiteren liegt der Erfindung die Aufgabe zugrunde, eine Vorrichtung zum Durchführen des Verfahrens zu schaffen, die es ermöglicht, in großen Serien, beispielsweise an Fließbändern eines Automobilherstellers, eingesetzt zu werden.

Was das Verfahren anbelangt, so wird diese Aufgabe durch die kennzeichnende Merkmale von Anspruch 1 gelöst.

Bei Anwendung des erfindungsgemäßen Verfahrens kann eine Tür an einer Kraftfahrzeug-Karosserie positioniert und befestigt werden, was vorteilhafterweise durch Schweißen geschieht. Dies erfolgt automatisch, wobei durch Tastfinger die räumliche Lage der Tür und der Karosserie zueinander ertastet wird und diese Impulse an einen Industrieroboter weitergegeben werden, der dann Steuer- und/oder Regelimpulse an weitere Geräte, z. B. Schweißroboter, weitergibt.

Außerdem wird die räumliche Lage der Tür in zwei verschiedenen, insbesondere senkrecht zueinander stehenden Ebenen zu der Karosserie bestimmend und erst daraufhin ein Signal an einen Industrieroboter, z. B. einen Schweißroboter, gegeben, der dann die Scharnierteile miteinander verschweißt.

Auf diese Weise lassen sich menschliche Fehler beim Einbau von Türen an Kraftfahrzeugkarosserien vollkommen ausschalten und ein hohes Maß an Genauigkeit und Gleichförmigkeit bei der Montage und Befestigung solcher Teile erzielen. Dadurch entsteht praktisch kein Ausschuß mehr.

Was die Vorrichtung anbelangt, so wird die diesbezügliche Aufgabe erfindungsgemäß durch eine Vorrichtung gelöst, in der

a) einer taktende Endlosförderer zur Heranförderung der Kfz.-Karosserien vorgesehen ist; und

b) durch einen motorischen Einleger die Autotüren einem als Endlosförderer ausgebildeten Magazinförderer zuführbar sind, wobei der Magazinförderer mehrere in Förderrichtung mit Abstand hintereinander angeordnete Magazine aufweist, die durch ein endloses, motorisch angetriebenes Zugelement miteinander verbunden sind, wobei die Magazine nach oben offen ausgebildet sind, in die die Kfz-Türen absetzbar sind; und

c) im Deckenbereich ein dreiachsiger Industrieroboter angeordnet ist, der einen Transportier- und Positionierrahmen steuert, insbesondere in vertikaler Ebene anhebt und absenkt und ihn um eine vertikale Achse um mindestens 180 Grad dreht; und

d) der Transport- und Positionierrahmen mehrere Pufferelemente und/oder mit Unterdruck beaufschlagbare Sauger aufweist, die sich sämtlich flächig gegen die Tür anlegen;

e) wobei der Transport- und Positionierrahmen mindestens eine Klemmvorrichtung zum Haltern der aus einem Magazin des Magazinförderers herauszunehmenden Tür und wenigstens einen Tastfinger aufweist, der mit einem Teil der Karosserie in Berührungskontakt gelangt; und

f) der Transport- und Positionierrahmen in seinem mittleren Bereich ein Raumgelenk besitzt, so daß der Transport- und Positionierrahmen die jeweils aufgenommene Tür raumgelenkig - schwimmend - haltert und sie in dieser Lage raumgelenkig gegen die mit der betreffenden Tür auszurüstende Öffnung der Karosserie heranfährt;

g) wobei der Transport- und Positionierrahmen mit Abstand in vertikaler Ebene - übereinander - wenigstens zwei motorisch, z. B. durch Druckluft bewegliche Andrückstücke aufweist, die jeweils eine Lasche von mit Abstand zueinander angeordnete, an der Innenseite der betreffenden Tür einstückig, z. B. angeschweißte, Scharniere gegen die Fläche der Karosserie, z. B. einen Holm, andrücken; und

h) im Abstand neben dem Magazinförderer ein motorisch, z. B. pneumatisch, ein- und ausfahrbarer Meßkopf zum Ertasten des Höhenbereichs der betreffenden Scharnierlaschen und der Winkelneigung in Bezug auf den Karosserieteil an den die Lasche angeschweißt werden soll in einer senkrecht dazu stehenden Ebenen angeordnet ist;

i) wobei der Vorrichtung ein Rechner zugeordnet ist, der die in zwei aufeinander senkrecht stehenden Ebenen ertasteten Werte mit vorgegebenen Grenzwerten vergleicht und daraufhin die Schweißroboter steuert.

Die Ausführungsform nach *Patentanspruch 3* ist dadurch gekennzeichnet, daß der Meßkopf zwei mit Abstand zueinander angeordnete, parallel zueinander verlaufende Tastplatten aufweist, die an ihren freien Enden je einen Tastfinger einstückig besitzen, die in vertikaler Richtung die Breite (Höhe) der anzuschweißenden Lasche des Scharniers ertasten und daß der Meßkopf außer den zwei mit Abstand zueinander angeordneten, parallel zueinander verlaufenden Tastplatten weitere Taster mit gerundeten Tasteraußenflächen aufweist, die gegen die nach außen gerichtete Oberfläche der Lasche des Scharniers zur Anlage bringbar sind, wobei jeder Tasterplatte je ein einstückiger Anschlag zugeordnet ist, die jeweils gegen Meßfühler einseitig frei anliegen und daß auch die Taster einseitig gegen Meßfühler frei anliegen und daß die Bewegungen der Meßfühler an einen Rechner weiterleitbar sind.

Diese Ausführungsform ermöglicht die genaue Abtastung der Lage der Scharniere einer Kraftfahrzeugtür o. dgl. Erst wenn die dadurch hervorgerufenen Impulse dem Roboter zum Befestigen des flächigen Teils, z. B. einem Schweißroboter, ein Signal geben, erfolgt die Befestigung des flächigen Teils, z. B. die Anschweißung von Scharnieren an den betreffenden Türholmen. Bei viertürigen Autos wird man in der Regel so vorgehen, daß man mit der Einschweißung der hinteren Türen beginnt und erst zum Schluß die vordere Türen einschweißt. Dabei können selbstverständlich auf beiden Seiten derartige Vorrichtungen angeordnet sein, um gleichzeitig taktweise gegenüberliegend die hinteren und danach die vorderen Türen einzuschweißen.

Gemäß *Patentanspruch 4* weist der Transport- und Positionierrahmen ein Teil mit einem Raumgelenk auf, wobei das Teil mehrere, insbesondere drei in den Eckpunkten eines Dreiecks angeordnete Pufferelemente an der die Tür aufnehmende Seite besitzt, die sich gegen die Außenfläche der Tür anlegen und daß das Teil an einen Rahmen angeordnet ist, der in drei Ebenen durch Kolben-Zylinder-Einheiten um jeweils ein begrenztes Maß verstellbar ist. Bei dieser Ausführungsform wird das flächige Teil, insbesondere eine Kraftfahrzeug-Tür, gewissermaßen "schwimmend" im Raum an das andere Teil, z. B. an eine Karosserie, herangeführt, so daß sich das flächige Teil bei Anlage gegen den anderen Körper gewissermaßen räumlich ausrichten kann.

Oftmals ist es notwendig, an flächige Körper nachträglich Teile anzuordnen, beispielsweise in Kfz.-Türen nach deren Positionierung und Anschweißung an den Türholmen die Mechanik für die Betätigung der Fenster und die Fensterscheiben selbst einzubauen. Diese zusätzlichen Teile wirken an verhältnismäßig langen Hebelarmen auf die Scharniere ein, so daß es zu einem Verziehen der Türen kommen kann, was eine nachträgliche, umständliche Ausrichtung derselben erforderlich machen würde. Deshalb ist erfindungsgemäß, vorgesehen, die flächigen Teile, insbesondere Kfz.-Türen, um ein geringes Maß von z. B. 1,5 Grad gegenüber der Horizontalen entgegen der Gewichtskomponente der nachträglich einzusetzenden Teile schräg anzuschweißen. Nach erfolgtem Einbau dieser Teile lassen sich dann die Türen problemlos öffnen und schließen.

Gemäß *Patentanspruch 5* ist der Rahmen mit dem Teil um wenigstens eine horizontale Achse in zwei entgegengesetzten Richtungen um ein begrenztes Winkelmaß neigungsverstellbar.

Eine weitere Ausführungsform ist gemäß *Patentanspruch 6* dadurch gekennzeichnet, daß dem Rahmen je mindestens ein durch je ein Kolben-Zylinder-Einheit gegen die Lasche des betreffenden Scharniers einwirkendes Andrückstück zugeordnet ist. Dies ist eine besonders vorteilhafte Ausführungsform der Erfindung.

In der Zeichnung ist die Erfindung - teils schematisch - an Ausführungsbeispielen veranschaulicht. Es zeigen:

Fig. 1  eine teilweise Draufsicht auf eine erfindungsgemäße Vorrichtung;
Fig. 2  eine Ansicht in Richtung des Pfeiles "Y" der Fig. 1;
Fig. 3  eine Einzelheit bei "X" der Fig. 1;
Fig. 4  einen Schnitt nach der Linie A - A der Fig. 3;
Fig. 5  eine Einzelheit bei "Z" der Fig. 2 und
Fig. 6  eine Teilansicht in Richtung des Pfeiles "W" der Fig. 5.

In der Zeichnung ist die Erfindung in Anwendung auf eine Vorrichtung zum Positionieren und Anschweißen von Türen an einer Kfz.-Karosserie veranschaulicht.

Mit dem Bezugszeichen 1 sind taktweise durch einen im einzelnen nicht dargestellten und nicht bezeichneten, z. B. als taktenden Linearförderer oder als kombinierter Linear-Hub-Senkrechtförderer ausgebildeten Endlosförderer herangeförderte Kfz.-Karosserien bezeichnet, die bei der dargestellten Ausführungsform auf jeder Seite zwei nicht dargestellte Türöffnungen aufweisen, die jeweils mit einer Tür versehen werden sollen.

Im vorher genau justierten Bereich der nachfolgend beschriebenen Vorrichtung wird jeweils der Endlosförderer stillgesetzt und die betreffende Karosserie 1 durch eine in Richtung C bzw. D abwechselnd arbeitende Hubvorrichtung 2 vom Endlosförderer um ein vorbestimmtes Maß in Richtung D, also nach oben, abgehoben. Im Längsabstand des Endlosförderers können mehrere solcher Hubvorrichtungen 2 und mehrere der nachfolgend beschriebenen Vorrichtungen zum Positionieren und Anschweißen von Türen mit Abstand zueinander angeordnet sein, die jeweils beim taktweisen Stillsetzen des Endlosförderers mit Karosserien 1 bestückt sind.

Auf jeder Seite der Karosserie 1 befinden sich bei der dargestellten Ausführungsform je zwei rechnergesteuerte Schweißroboter 3, 4 bzw. 5, 6, wobei die jeweils oben an einer Deckenkonstruktion 7 befestigten Schweißroboter 3 und 5 obere Schweißnähte und die jeweils unten auf einem Fundament 8 befestigten Schweißroboter 4 bzw. 6 jeweils untenliegende Schweißnähte schweißen. Auf diese Weise wird die Sicherheit erhöht und auch bei Ausfall eines Schweißroboters mit Sicherheit eine zuverlässige Anschweißung erreicht.

Die anzuschweißenden Türen werden durch einen Einleger 9, der parallel zur Förderrichtung des die Kfz.-Karosserien heranfördernden Förderers beweglich ist zu einem Magazinförderer 10 herangefördert. Der Einleger 9 besteht aus einem laufkatzenartigen Gestell, das im Abstand vom Boden 11a an einer Schiene verfahrbar ist und die Türen 11, z. B. mittels Druckluft- und/oder Hydraulikspanner, hält und sie in einzelne Magazine 12 des Magazinförderers ablegt, der ebenfalls ein Endlosförderer ist, an dem die Magazine 12 durch mit Abstand zueinander angeordnete Vorsprünge gebildet sind, die taktweise durch einen motorischen Antrieb 61 über ein Fördermittel 13 angetrieben werden, das die Magazine 12 einstückig miteinander verbindet. Bei der aus Fig. 2 ersichtlichen Ausführungsform sind vier anzuschweißende Türen 11 im Magazinförderer 10 angeordnet und ragen im wesentlichen in vertikaler Ebene aus den Magazinen 12 des Magazinförderers 10 hervor. Deutlich erkennt man aus Fig. 2, daß die Türen 11 entsprechend der äußeren Kontur der Karosserie kurvenförmig verlaufen.

Auf diametral der Hubvorrichtung 2 gegenüberliegenden Seite sind mindestens ein weiterer Einleger 9 und ein weiterer Magazinförderer 10 angeordnet (nicht dargestellt).

Die durch den Einleger 9 herangeförderten Türen 11 weisen bereits mit ihnen durch Schweißnähte einstückig verbundene Scharniere auf, die insgesamt mit dem Bezugszeichen 14 bezeichnet sind. Mit jeder Tür 11 sind in vertikaler Richtung mit Abstand übereinander zwei solcher Scharniere 14 durch Schweißnähte fest verbunden (Fig. 5).

Wie die Fig. 3 erkennen läßt, weist jedes Scharnier 14 zwei Laschen 15 bzw. 16 auf, die jeweils durch eine vertikale Schwenkachse 17 gelenkbeweglich miteinander verbunden sind. Die Lasche 15 ist mit der Außenkontur 18 (Fig. 3) durch Schweißnähte in der erwähnten Art und Weise einstückig verbunden, so daß die Türen 11 jeweils mit diesen zwei übereinander angeordneten, fest angeschweißten Scharnieren 14 durch den Einleger 9 zum Magazinförderer 10 herantransportiert werden.

Es ist nun erforderlich, diese mit jeweils zwei fest angeschweißten Scharnieren 14 ausgerüsteten Türen 11 mit ihren Laschen 16 an dem jeweils zugeordneten Holm der Karosserie anzuschweißen. Bei viertürigen Kraftfahrzeugen wird vorzugsweise in der Reihenfolge so begonnen, daß zunächst die hinteren Türen positioniert und die Laschen 16 an den zugeordneten Holmen angeschweißt werden, woraufhin erst die jeweils vorderen Türen positioniert in ebensolcher Weise angeschweißt werden. Nachfolgend wird anhand einer Tür 11 deren Positionieren und Anschweißen beschrieben. Selbstverständlich geschieht das Positionieren und Anschweißen der übrigen Türen 11 entsprechend.

Die Türen 11 werden aus dem Magazinförderer 10 einzeln nacheinander durch einen Transport- und Positionierrahmen 19 entnommen. Dies geschieht dadurch, daß durch einen dreiachsigen Industrieroboter 20, der den Transport und Positionierrahmen 19 in Richtung K bzw. V, also in vertikaler Ebene heben und senken kann, dieser angehoben und in Richtung E (Fig. 2) zu dem Magazinförderer 10 transportiert wird. Dort wird der Transport- und Positionierrahmen 19 in Richtung K abgesenkt und in Richtung E gegen die Außenkontur der betreffenden Tür 11 gefahren, bis Pufferelemente 21, 22 und 23 und Sauger 55, 56 an der Außenkontur der betreffenden Tür 11 anliegen. Die Pufferelemente 21 bis 23 bestehen bei der dargestellten Ausführungsform aus synthetischem Gummi, können aber auch in anderer Weise ausgebildet sein. Außerdem weist der Transport- und Positionierrahmen 19 geeignete Spannelemente zum Ergreifen und Transportieren der Tür auf, die beispielsweise über pneumatische und/oder hydraulische Kniehebelgelenkvorrichtungen betätigt sein können. Dadurch läßt sich z. B. das obere Rahmenteil der Tür 11 durch Klemmwirkung ergreifen. Außerdem ist es möglich, ein weiteres zangenförmiges Element durch derartige Kniehebelspannvorrichtungen an der Tür wirksam werden zu lassen. Schließlich werden die Sauger 55, 56 mit Unterdruck beaufschlagt um zusätzlich die Tür 11 sicher zu haltern und zu transportieren.

Die Pufferelemente 21 bis 23 sind im übrigen in den Eckpunkten eines Dreiecks angeordnet. Etwa im Schnittpunkt der Winkelhalbierenden dieses Dreiecks befindet sich ein Raumgelenk 24, das bei der dargestellten Ausführungsform ebenfalls aus synthetischem Gummi besteht oder nach Art eines Silentblockes oder als Kardangelenk oder Kugelgelenk ausgebildet sein kann, aber auch durch eine andere Gelenkanordnung ersetzbar ist. Das Raumgelenk 24 ermöglicht es, daß sich der die Tür 11 aufnehmende und während des Transports zur Karosserie 1 halternde Teil 25 des Transport- und Positionierrahmens 19 gewissermaßen allseitig schwimmend um ein begrenztes Maß bewegen kann, so daß der Transport- und Positionierrahmen 19 bis zur Anlage gegen die Karosserie 1 gefahren werden kann, so daß sich die herangeführte Tür 11 - gewissermaßen schwimmend - in der Kontur 26 der Karosserie 1 auszugleichen vermag, bis die äußere Kontur der Tür 11 genau der Außenkontur der Karosserie 26 entspricht. Dabei wird über die Kolben-Zylinder-Einheit 27 in Richtung der Transportbewegung F ein pneumatischer Ausgleich geschaffen, während durch die Kolben-Zylinder-Einheit 28 ein solcher pneumatischer Ausgleich in vertikaler Ebene geschieht. Schließlich ist mit dem Bezugszeichen 29 eine gesteuerte, z. B. pneumatische Kolben-Zylinder-Einheit bezeichnet, die in einer senkrecht zur Ebene des durch die Kolben-Zylinder-Einheit 27 geschaffenen pneumatischen Ausgleichs beweglich ist, so daß der Transport- und Positionierrahmen 19 durch diese Kolben-Zylinder-Einheiten 27, 28 und 29 in drei Ebenen um ein begrenztes Maß gelagert ist und außerdem durch das Raumgelenk 24 eine begrenzte, allseitige Kippbewegung des Teils 25 und damit der Pufferelemente 21, 22 und 23 und der an dieser gelagerten Tür 11 ermöglicht ist.

Die Bezugszeichen 30 und 31 bezeichnen Führungen für den pneumatischen Ausgleich in vertikaler Ebene.

Dem Transport- und Positionierrahmen 19 ist bei der dargestellten Ausführungsform mindestens ein Abstandsfinger 32 zugeordnet, der beim Heranfahren einer Tür 11 durch den Transport- und Positionierrahmen 19 gegen einen Teil der Karosserie 1, z. B. einen Türholmen anstößt und damit die Tür 11 zur Türöffnung ausrichtet.

Das Kommando an den Roboter 20 zum Heranfördern einer Tür 11 mittels des Transport- und Positionierrahmens 19 wird indessen erst dann gegeben, wenn die Hubvorrichtung 2 die Karosserie 1 gegen mehrere Fühlelemente 33 bzw. 34 anstößt. In Längsrichtung der Karosserie 1, d. h. in ihrer Förderrichtung, können auf jeder Seite der Karosserie 1 z. B. zwei solcher Fühlelemente angeordnet sein. Dann befindet sich die Karosserie in der richtigen Höhenlage zum Heranfördern der Tür 11 durch den Industrieroboter 20 mittels dessen Transport- und Positionierrahmen 19. Die genaue Hubbewegung der Hubvorrichtung 2 und der Schaltimpuls an den Endlosförderer für die Karosserie 1 wird durch Justieren vorbestimmt.

Nach dem Aufnehmen einer Tür 11 durch den Transport- und Positionierrahmen 19 dreht der Roboter 20 um eine vertikale Achse 35 den Transport- und Positionierrahmen 19 um 180 Grad (Fig. 1) in die richtige Lage zur Karosserie 1.

Auf dem Boden steht auf jeder Seite der Karosserie 1 eine Meßstation 36, die einen Meßkopf 37 (Fig. 4) aufweist. Dieser Meßkopf 37 weist in vertikaler Ebene mit Abstand übereinander liegende Tastplatten 38 und 39 auf, die an ihren einander zugekehrten Seitenwänden koaxial zueinander angeordnete Tastfinger 40 bzw. 41 einstückig besitzen. Der Abstand der Tastplatten 38 und 39 und damit der Tastfinger 40 und 41 ist um ein begrenztes Maß durch Verschiebung veränderbar. Dabei entspricht der Abstand der Tastfinger 40 und 41 der vertikalen Höhe der Lasche 16 des Scharniers 14. Die Tastbewegungen der Tastfinger 40 und 41 werden über die Tastplatten 38 und 39 jeweils über Anschläge 42 bzw. 43 an Meßfühler 44 bzw. 45 übertragen, die durch die Anschläge 42 bzw. 43 jeweils an ihrer nach außen gerichteten Stirnseite, also einseitig, beaufschlagbar sind. Der Anschlag 42 ist einstückig mit der Tastplatte 38 und der Anschlag 43 einstückig mit der Tastplatte 39 verbunden. Die Bewegung der Meßfühler 44 bzw. 45 werden an einen Rechner weitergeleitet. Diese Bewegungen können über nur eine Leitung an den Rechner weitergegeben werden.

Um 90 Grad zur Verschieberichtung der Tastplatten 38, 39 und damit auch der Tastfinger 40 und 41 versetzt sind zwei weitere Taster 46 und 47 angeordnet, die um ein begrenztes Maß ebenfalls schwenkbeweglich sind und gegen die Außenfläche der Lasche 16 des Scharniers 14 zur Anlage gebracht werden können. Die Taster 46 und 47 sind ebenfalls mit Abstand zueinander angeordnet und sind an ihrer Tastaußenfläche 49 bzw. 50, die gegen die Außenfläche der Lasche 16 zur Anlage gebracht werden können, nach einem Kreisbogen verlaufend, ausgebildet. Die Bewegungen dieser Taster 46 und 47 wird auf Meßfühler 51 bzw. 52 übertragen, deren Bewegungen ebenfalls an den Rechner weitergeleitet werden.

Der Meßkopf 37 ist in Richtung G bzw. H (Fig. 1) um ein begrenztes Maß durch eine nicht dargestellte Kolben-Zylinder-Einheit verschieblich und kann aus einem Gehäuse 53 herausgefahren werden, ist aber während der Schweißarbeiten geschützt in dem Gehäuse 53 angeordnet, so daß er nicht durch Schweißspritzer beschädigt oder verschmutzt werden kann. Beim oder nach dem Einfahren fallen vor die vordere Öffnung des Gehäuses 53 Schutzklappen.

Durch den Meßkopf 37 ist somit die Bestimmung der Lage der Tür 11 in zwei zueinander senkrecht stehenden Ebenen möglich. Haben die Meßfühler 40 und 41 die Lasche 16 zwischen sich ergriffen und überschreitet der von den Tastern 49 und 50 an den Rechner weitergegebene Wert nicht ein vorgegebenes Maß, so erhält der betreffende Schweißroboter 3, 4 bzw. 5, 6 den Schweißbefehl. Der durch die Taster 49 und 50 ertastete Wert ergibt ein Maß für die Schrägstellung der Lasche 16 in Bezug auf die Fläche, an die die Lasche angeschweißt wird. In der Regel wird man eine leichte keilförmige Anordnung der Lasche 16 zur Außenkontur der Karosserie bzw. des Holmes, an den die Lasche 16 angeschweißt werden soll, anstreben. Es ist jedoch auch möglich, die Lasche 16 planparallel an dem anzuschweißenden Teil anzuordnen.

Der Transport- und Positionierrahmen 19 enthält außerdem eine manuelle Verstellvorrichtung 54, durch die sich das Teil 25 mit sämtlichen Spannvorrichtungen und damit auch mit den Puffern 21, 22 und 23 um ein gewisses Winkelmaß um eine horizontale Achse verdrehen läßt, so daß die zu positionierende und anzuschweißende Tür 11 um ein gewisses Winkelmaß, gewissermaßen "schief", von z. B. 1,5 Grad zur Horizontalen geneigt gegen die Gewichtskomponente befestigt wird. Dies hat zur Folge, daß nach dem späteren Einbau aller Mechanikteile für die Fensterhebung, Türverkleidung usw. die Tür genau paßt, während sie bei vorheriger genauer Befestigung durch die Gewichtskomponente der zusätzlich noch einzubauenden Teile klemmen könnte.

Des weiteren weist der Positionierrahmen 19 durch Kolben-Zylinder-Einheiten 57 bzw. 58 betätigbare Andrückstücke 59 bzw. 60 auf, die während des Schweißprozesses die Laschen 16 der Scharniere 14 gegen den betreffenden Holm der Karosserie 1 andrücken. Durch entgegengesetzte Druckmitteldruckbeaufschlagung werden die Andruckstücke 59 bzw. 60 eingefahren.

Die Wirkungsweise der aus der Zeichnung ersichtlichen Ausführungsform ist folgende:

Angenommen, eine Karosserie 1 mit vier Türöffnungen zum Montieren von vier Türen sei durch die Hubvorrichtung 2 in Richtung D hochgehoben worden, bis die Fühlelemente 33 und 34 in Berührungskontakt mit den dafür vorgesehenen Teilen der Karosserie 1 gelangen. Dann wird der Industrieroboter 20 automatisch in Aktion gesetzt, fährt den Transport und Positionierrahmen 19 zu dem Magazinförderer 10, woraufhin der Transport- und Positionierrahmen 19 in Richtung K abgesenkt wird, eine Tür 11 aus dem Magazinförderer 10 aufnimmt, wieder in Richtung V angehoben wird, d. h. die Tür 11 wird aus dem betreffenden Magazin 12 herausgenommen. Alsdann bewegt der Roboter 20 den Transport- und Positionierrahmen 19 in Richtung F und dreht ihn dabei um 180 Grad und fährt die Tür 11 gegen die dafür vorgesehene Öffnung der Karosserie 1, bis der Abstandsfinger 32 gegen den dafür vorgesehenen Anschlag der Karosserie 1 bzw. gegen den Holmen zur Anlage kommt, wobei durch das Raumgelenk 24 eine gewissermaßen schwimmende Zentrierung der Tür 11 in Bezug auf die Öffnung entsteht und ein pneumatischer Ausgleich beim Gegenfahren der Tür 11 gegen die Karosserie 1 durch die dafür vorgesehenen pneumatischen Kolben-Zylinder-Einheiten 27, 28 gegeben ist, während die Kolben-Zylinder-Einheit 29 gesteuert ist. Alsdann fährt der Meßkopf 37 aus dem Gehäuse 53 heraus und tastet mittels der Meßfinger 40 und 41 die Lasche 16 des Scharniers 14 ab. Gleichzeitig gelangen die Taster 46 und 47 mit ihren gerundeten Außenflächen 49 und 50 gegen die Außenseite der Lasche 14 und ertasten damit mit Abstand zueinander zwei Referenzpunkte der Scharnierlasche 16 in Wagenbreite, bestimmen also gewissermaßen eine Ebene. Stimmen die von den Fingern 40 und 41 sowie den Tastern 46 und 47 an den Rechner gegebenen Werte mit den vorgegebenem Werten innerhalb der Toleranzgrenzen überein, so erhalten die auf dieser Wagenseite befindlichen Schweißroboter, z. B. 3 und 4, einen Schweißbefehl. Der jeweils obere Roboter, z. B. 3, schweißt dann die obere Naht an der betreffenden Lasche 16 und der untere Roboter, z. B. 4, die jeweils untere Naht an der Lasche 16.

Nach Beendigung des Schweißvorganges wird die betreffende Schweißdüse zu einer Reinigungsvorrichtung automatisch hinbewegt, gereinigt und ausgeblasen, woraufhin die Karosserie 1 mit den angeschweißten Türen abgesenkt, also in Richtung C (Fig. 2) bewegt wird und sich der Endlosförderer taktweise weiterbewegt, bis eine neue Karosserie 1 zu der Hubvorrichtung 2 gelangt und erneut in Richtung D gehoben wird, woraufhin sich der Arbeitszyklus wiederholt. Dadurch lassen sich Türen 11, aber auch Kofferraumdeckel, Motorraumdeckel usw., im Raum vollkommen automatisch positionieren und befestigen.

Der Magazinförderer 10 wird automatisch durch den Einleger 9 nachgefüllt und bewegt sich ebenfalls taktweise in Richtung F, so daß die Industrieroboter 20 mit seiner Transport- und Positioniervorrichtung 19 stets die in Transportrich-

11

tung F vordere Tür 11 aus dem Magazinförderer 10 herausnehmen kann.

**Bezugszeichenliste**

| | |
|---|---|
| 1 | Karosserie |
| 2 | Hubvorrichtung |
| 3 | Schweißroboter |
| 4 | Schweißroboter |
| 5 | Schweißroboter |
| 6 | Schweißroboter |
| 7 | Deckenkonstruktion |
| 8 | Fundament |
| 9 | Einleger |
| 10 | Magazinförderer |
| 11 | Tür |
| 11a | Boden |
| 12 | Magazin |
| 13 | Fördermittel |
| 14 | Scharnier |
| 15 | Lasche |
| 16 | Lasche |
| 17 | Schwenkachse |
| 18 | Außenkontur |
| 19 | Transport- und Positionierrahmen |
| 20 | Roboter |
| 21 | Pufferelement |
| 22 | Pufferelement |
| 23 | Pufferelement |
| 24 | Raumgelenk |
| 25 | Teil |
| 26 | Außenkontur |
| 27 | Kolben-Zylinder-Einheit |
| 28 | Kolben-Zylinder-Einheit |
| 29 | gesteuerte Kolben-Zylinder-Einheit |
| 30 | Führung |
| 31 | Führung |
| 32 | Abstandsfinger |
| 33 | Abstandsfinger |
| 34 | Abstandsfinger |
| 35 | Achse |
| 36 | Meßstation |
| 37 | Meßkopf |
| 38 | Tastplatte |
| 39 | Tastplatte |
| 40 | Tastfinger |
| 41 | Tastfinger |
| 42 | Anschlag |
| 43 | Anschlag |
| 44 | Meßfühler |
| 45 | Meßfühler |
| 46 | Taster |
| 47 | Taster |
| 48 | Außenfläche |
| 49 | Tasteraußenfläche |
| 50 | Tasteraußenfläche |
| 51 | Meßfühler |
| 52 | Meßfühler |
| 53 | Gehäuse |
| 54 | Verstellvorrichtung |
| 55 | Sauger |
| 56 | Sauger |
| 57 | Kolben-Zylinder-Einheit |
| 58 | Kolben-Zylinder-Einheit |

12

| | |
|---|---|
| 59 | Andrückstück |
| 60 | Andrückstück |
| 61 | Antrieb |
| C | Hubrichtung |
| D | Hubrichtung |
| E | Bewegungsrichtung |
| F | Bewegungsrichtung |
| G | Verschieberichtung |
| K | Bewegungsrichtung |
| V | Bewegungsrichtung |

**Patentansprüche**

1. Verfahren zum Positionieren und zum Befestigen von flächigen Körpern (11) im Raum an mindestens einem anderen Körper (1), insbesondere zum Positionieren und anschließendem Befestigen von Teilen (11) an einer Kraftfahrzeug-Karosserie (1), wobei der flächige Körper (11) an den anderen Körper (1) heranbewegt und während eines Teiles dieser Bewegung über mindestens einen Abstandsfinger (32) seine Lage zu dem anderen Körper (1) bestimmt wird, wobei der flächige Körper (11) in drei Freiheitsgraden bis zum körperlichen Kontakt zu dem anderen Körper (1) weiterbewegt wird und daraufhin in zwei verschiedenen Ebenen an einem einstückigen Teil (10) des flächigen Körpers (11) die Lage im Raum bestimmt, insbesondere ertastet wird und daß die ertasteten Werte an einen Rechner weitergegeben werden, der die zum Durchführen der Befestigungsarbeit für den flächigen Körper (11) und/oder dessen damit einstückig verbundenen Teil (14) weitergegeben werden, woraufhin ein Industrieroboter (3, 4) das betreffende Teil (16) mit dem anderen Körper (1) verbindet, *dadurch gekennzeichnet,* daß

a) der eine Teil eine Karosserie eines Kraftfahrzeuges ist, die angehoben wird, bis ihre Höhenlage durch Fühlelemente (33, 34) festgestellt wird;

b) und daß der flächige Körper eine Kfz.-Tür (11) versehen mit zwei in unterschiedlichen Ebenen übereinander befestigten, insbesondere angeschweißten, Scharnieren (14) ist, die gegen die da für vorgesehene Öffnung bewegt wird, bis der sich mit der Kfz.-Tür (11) fest mitbewegende Abstandsfinger (32) an einer dafür vorbestimmten Stelle, zum Beispiel mit dem Holmen einer Kfz.-Karosserie (1), anschlägt, wobei ein Raumgelenk es ermöglicht, daß sich der die Tür (11) aufnehmende und während des Transports zur Karosserie (1) haltende Teil (19) allseitig schwimmend um ein begrenztes Maß bewegen kann, wobei sich die herangeförderte Kfz.-Tür (11) - gewissermaßen schwimmend - in der Kontur (26) der Karosserie (1) auszugleichen vermag, bis die äußere Kontur der Tür (11) genau in der Außenkontur (26) der Karosserie (1) einliegt, wobei eine Einstellbewegung gegenüber der Karosserie (1), als Feinjustage in einer Ebene erfolgt, die in der Transportbewegungsrichtung (E - F) orthogonal zur Karosserie (1) liegt, während eine weitere Feinjustage in vertikaler Ebene und abermalige Feinjustage parallel zur Karosserie (1) vorgenommen wird;

c) und daß die vertikale Höhenzuordnung der Scharniere (14) durch Tastfinger (40, 41) ertastet und diese Werte an einen Rechner weitergegeben werden, wobei Andrückstücke (59, 60), vor, während und nach dem Tast-Meß-Vorgang gegen die Tür angepreßt werden, um ein Bewegen der noch nicht angeschweißten Tür (1) zu verhindern;

d) und daß gleichzeitig mit dem Ertasten der Höhe der Scharniere (14) eine dazu vorzugsweise senkrechte Ebene - die nach außen gerichtete Seitenwand des betreffenden Scharnierteils (16) - durch zwei mit Abstand zueinander angeordnete Taster (46, 47) ertastet und dadurch die Winkellage dieses Scharnierteils (16) in Bezug auf die Karosserie (1) bestimmt und ebenfalls an einen Rechner weitergegeben wird;

e) und daß bei innerhalb vorgegebener Toleranzwerte gemäß c) und d) der Rechner an einen oder an mehrere Schweißroboter (3, 4 bzw. 5, 6) auf jeder Seite der Karosserie (1) einen Schweißbefehl erteilt, woraufhin diese Schweißroboter (3, 4 bzw. 5, 6) jeweils mindestens eine obere und mindestens eine untere Schweißnaht an jeder Lasche (16) jedes Scharniers (14) einer jeden Tür (11) schweißen;

f) daß vor Beginn des Schweißvorganges die Tastfinger (40, 41 bzw. 46, 47) aus dem Schweißbereich wegbewegt und geschützt angeordnet werden;

g) und daß nach dem Schweißen die Schweißvorrichtungen automatisch mechanisch und/oder durch Druckgas, z. B. geölte Druckluft, gesäubert werden;

h) und daß nach dem Schweißen die Karosserie (1) wieder auf den als taktenden Linearförderer oder auf den als kombinierten Linear-Hub-Senkförderer ausgebildeten Endlosförderer abgesenkt und taktweise weiterbewegt werden.

2. Vorrichtung zum Positionieren und zum Befestigen von Kraftfahrzeug-Türen (11) an einer Kfz.-Karosserie (1) nach dem Verfahren von Anspruch 1, in welcher Vorrichtung:

a) ein taktender Endlosförderer zu Heranförderung der Kfz.-Karosserien vorgesehen ist; und

b) durch einen motorischen Einleger (9) die Autotüren (11) einem als Endlosförderer ausgebildeten Magazinförderer (10) zuführbar sind, wobei der Magazinförderer (10) mehrere in Förderrichtung mit Abstand hintereinander angeordnete Magazine (12) aufweist, die durch ein endloses, motorisch angetriebenes Zugelement miteinander verbunden sind, wobei die Magazine (12) nach oben offen ausgebildet sind, in die die Kfz.-Türen (11) absetzbar sind; und

c) im Deckenbereich ein dreiachsiger Industrieroboter (20) angeordnet ist, der einen Transportier- und Positionierrahmen (19) steuert, insbesondere in vertikaler Ebene (V bzw. K) anhebt und absenkt und ihn um eine vertikale Achse (35) um mindestens 180 Grad dreht; und

d) der Transport- und Positionierrahmen (19) mehrere Pufferelemente (21, 22, 23) und/oder mit Unterdruck beaufschlagbare Sauger (55, 56) aufweist, die sich sämtlich flächig gegen die Tür (11) anlegen;

e) wobei der Transport- und Positionierrahmen (19) mindestens eine Klemmvorrichtung zum Haltern der aus einem Magazin (12) des Magazinförderers (10) heraus zunehmenden Tür (11) und wenigstens einen Abstandsfinger (32) aufweist, der mit einem Teil der Karosserie in Berührungskontakt gelangt; und

f) der Transport- und Positionierrahmen in seinem mittleren Bereich ein Raumgelenk (24) besitzt, so daß der Transport- und Positionierrahmen (19) die jeweils aufgenommene Tür (11) raumgelenkig - schwimmend - haltert und sie in dieser Lage raumgelenkig gegen die mit der betreffenden Tür (11) auszurüstende Öffnung der Karosserie (1) heranfährt;

g) wobei der Transport- und Positionierrahmen (19) mit Abstand in vertikaler Ebene - übereinander - wenigstens zwei motorisch, z. B. durch Druckluft bewegliche Andrückstücke (59, 60) aufweist, die jeweils eine Lasche (16) von mit Abstand zueinander angeordnete, an der Innenseite der betreffenden Tür (11) einstückig, z. B. angeschweißte, Scharniere (14) gegen die Fläche (11) der Karosserie, z. B. einen Holm, andrücken; und

h) im Abstand neben dem Magazinförderer (10) ein motorisch, z. B. pneumatisch, ein- und ausfahrbarer Meßkopf (37) zum Ertasten des Höhenbereichs der betreffenden Scharnierlaschen (16) und der Winkelneigung in Bezug auf den Karosserieteil an den die Lasche (16) angeschweißt werden soll in einer senkrecht dazu stehenden Ebene angeordnet ist;

i) wobei der Vorrichtung ein Rechner zugeordnet ist, der die in zwei aufeinander senkrecht stehenden Ebenen ertasteten Werte mit vorgegebenen Grenzwerten vergleicht und daraufhin die Schweißroboter (3, 4 bzw. 5, 6), steuert.

3. Vorrichtung nach Anspruch 2, dadurch gekennzeichnet, daß der Meßkopf (37) zwei mit Abstand zueinander angeordnete, parallel zueinander verlaufende Tastplatten (38, 39) aufweist, die an ihren freien Enden je einen Tastfinger (40 bzw. 41) einstückig besitzen, die in vertikaler Richtung die Breite (Höhe) der anzuschweißenden Lasche (16) des Scharniers (14) ertasten und daß der Meßkopf (37) außer den zwei mit Abstand zueinander angeordneten, parallel zueinander verlaufenden Tastplatten (38, 39) weitere Taster (46, 47) mit gerundeten Taster außenflächen (49, 50) aufweist, die gegen die nach außen gerichtete Oberfläche der Lasche (16) des Scharniers (14) zur Anlage bringbar sind, wobei jeder Tasterplatte (38, 39) je ein einstückiger Anschlag (42 bzw. 43) zugeordnet ist, die jeweils gegen Meßfühler (44 bzw. 45) einseitig frei anliegen und daß auch die Taster (46 bzw. 47) einseitig gegen Meßfühler (51 bzw. 52) frei anliegen und daß die Bewegungen der Meßfühler (44, 45 bzw. 51, 52) an einen Rechner weiterleitbar sind.

4. Vorrichtung nach Anspruch 2 oder 3, *dadurch gekennzeichnet,* daß der Transport- und Positionierrahmen (19) ein Teil (25) mit einem Raumgelenk (24) aufweist, wobei das Teil (25) mehrere, insbesondere drei in den Eckpunkten eines Dreiecks angeordnete Pufferelemente (21, 22 und 23) an der die Tür (11) aufnehmenden Seite besitzt, die sich gegen die Außenfläche der Tür (11) anlegen und daß das Teil (25) an einen Rahmen angeordnet ist, der in drei Ebenen durch Kolben-Zylinder-Einheiten (27, 28, 29) um jeweils ein begrenztes Maß verstellbar ist.

5. Vorrichtung nach Anspruch 4, *dadurch gekennzeichnet,* daß der Rahmen mit dem Teil (25) um wenigstens eine horizontale Achse in zwei entgegengesetzten Richtungen um ein begrenztes Winkelmaß neigungsverstellbar ist.

6. Vorrichtung nach Anspruch 2 oder einem der folgenden, *dadurch gekennzeichnet,* daß dem Rahmen je mindestens ein durch je eine Kolben-Zylinder-Einheit (57 bzw. 58) gegen die Lasche (16) des betreffenden Scharniers (14) einwirkendes Andrückstück zugeordnet ist.

**Claims**

1. Method for positioning and securing planar bodies (11) spatially to at least one other body (1), in particular for positioning and subsequently securing parts (11) to an automobile body (1) where the planar body (11) is moved towards the other body (1) and during this part of the movement its position relative to the other body (1) is established by means of at least one distance probe (32) whereby the planar body (11) is moved further in three degrees of freedom until making bodily contact with the other body (1) and is subsequently probed in two different planes, on a one-piece part (10) of the planar body (11), the spatial position is established, is probed in particular and that the value obtained by the probing is routed to a computer, which, in order to carry-out the securing work for the planar body (11) and/or its thereby connected one-piece part, is routed further whereupon an industry robot (e.g. 3, 4) connects the pertinent part (16) to the other body (1) *characterized in that;*

a) one of the parts is an automobile body which is elevated until its height position is established by means of the sensing elements (33, 34);

b) and that the planar body is an automobile door (11) which is provided with two hinges (14), particularly welded and which are secured in two planes one above the other, and which is moved toward the opening especially provided for it, until the distance probe (32) which moves rigidly with the door of the automobile (11), butts-up against an especially-provided location, for example the spar of an automobile body (1), whereby a cardan joint makes it possible for the part (19), which picks-up the door (11) and holds it during the time it is being transported to the body (1) in a "floating" manner, to move to a limited extent on all sides, whereby the transported automobile door (11), more-or-less "floating" can fit into the contour (26) of the body (1), until the outer contour of the door (11) is positioned exactly in the outer contour of the body (1), whereby an adjustment movement follows as compared to the body (1) as a fine adjustment in one plane, which, in the direction of transport (E - F) lies orthogonally to the body (1) whereas a further finer adjustment is carried-out in the vertical plane and repeated fine adjustments parallel to the body (1);

c) and that the vertical height correlation of the hinge (14) is probed by means of the probe (40, 41) and these values are routed to a computer, whereby compression fittings (59, 60) are pressed against the door prior-to, during and subsequent to the probing-measuring sequence, in order to prevent the door (1), which has not been welded yet, from moving;

d) and that simultaneously with the probing of the height of the hinge (14) a pertinent, correlated, preferred perpendicular plane, the side wall of the subject hinge part (16) which is facing outward, is probed by means of two probes (46, 47) which are arranged at a distance from each other and thereby establishing the angular position of the hinge part (16) as compared to the body (1) and is similarly routed further to a computer;

e) and that, within previously-specified tolerance values in accordance with c) and d), the computer issues welding instructions to one or more welding robots (3, 4 or 5, 6) on each side of the body (1), subsequent to which these welding robots (3, 4 or 5, 6) produce a weld, respectively, at least one upper weld and at least one lower weld on each fastener (18) of each hinge (14) of each door (11);

f) that prior to commencing the welding sequence the probes (40, 41 or 46, 47) move out of the welding range and are arranged in such a way that they are protected;

g) and that subsequent to the welding sequence the welding device is cleaned either mechanically and/or by means of pressurized gas e.g. lubricated, compressed air;

h) and that subsequent to the welding cycle the body (1) is again lowered onto the cycled linear conveyor or onto the endless conveyor which is in the form of a combined linear-elevating-lowering conveyor and is transported further cycled.

2. Device in order to carry-out the method in accordance with claim 1, whereby the planar body (11) is moved toward a body (1) and during part of this movement its position as related to the body (1) can be established by means of at least one distance probe (32) and subsequently the body (11) can be moved toward the body (1) and can continue to be moved until making bodily contact with the body (1) and consequently the spatial position can be established, and in particular, it can be probed, and the planar body (11) can be moved in three degrees of freedom toward the body (1) and that the resulting values of the probing are passed on to a computer, which can be routed further in order to carry-out the securing work for the planar body (11) and/or the thereby one-piece connected part (14), whereupon the respective part (16) can be joined by means of an industry robot (e.g. 3, 4) to the body *characterized in that,*

a) by means of a motor-operated depositing device (9) the automobile doors (11) can be transported to a magazine conveyor (10) which is in the form of an endless conveyor belt, whereby the magazine conveyor (10) is provided with a number of magazines (12) which are arranged at a distance behind each other in the direction of transport, and which are connected to each other by means of an endless, motor-driven traction device, whereby the magazines (12) are such that they have an opening at the top into which the automobile doors (11) can be deposited;

b) and that a three-axled industry robot, which is located in the area of the roof, controls a transporting and positioning frame (19), elevates and lowers it particularly plane (V or K) and rotates it round a vertical axis (35) by at least 180°;

c) and that the transporting and positioning frame (19) is equipped with several buffer elements (21, 22, 23) and/or suction devices (55, 56) which can be loaded with under-pressure, which position themselves entirely planar against the door (11);

d) whereby the transporting and positioning frame (19) is equipped with at least one clamping device for holding the door (11) which is to be extracted from a magazine (12) of the magazine conveyor and at least one distance probe (32) which makes contact with one part of the body;

e) and that the middle area of the transporting and positioning frame is provided with a cardan joint (24) so that the transporting and positioning frame (19) holds the respectively picked-up door (11) "floating" and, in this position, moves it cardanically toward the opening in the body (1) which is to be fitted with the respective door (11);

f) whereby the transporting and positioning frame (19) is equipped with at least two motor-driven, e.g. compressed air, moveable compression fittings (59, 60) which are arranged at a distance one above the other in the vertical plane, which press, respectively one fastener (16) of hinges (14), which are welded at a distance from each other, in one piece, to the innerside of the pertinent door (11), against the face (11) of the body, e.g. a spar;

g) and that, at a distance near to the magazine conveyor (10) a motor-driven pneumatic retractable measuring head e.g. (37), for probing the height range of the pertinent hinge fastener (16) and the angle of inclination as compared to the body part to which the fastener (16) is to be welded, is arranged in a plane which is to be perpendicular to it;

h) whereby the device is correlated to a computer which compares the values of the probing in two vertically positioned planes with previously-specified limiting values and subsequently controls the parts of the device, in particular the robot welders (3, 4 or 5, 6).

3. Device in accordance with claim 2, *characterized in that,* the measuring head (37) is equipped with two sensing plates (38, 39) which are arranged parallelly at a distance from each other, and each of the free ends of which is equipped with a probe (40 or 41) as one piece, which probes the vertical direction, the width (height) of the fastener (16), which is to be welded on, of the hinge (14) and that the measuring head (37) is equipped with further probes (46, 47) with rounded outer probe faces (49, 50) in addition to the probe plates (38, 39) which are arranged parallely at a distance from each other, and which are to be brought into position against the surface of the fastener (16) which faces outward, of the hinge (14), whereby each probing plate (38, 39) is correlated to a one-piece stopping device (42 or 43), which lie in contact on one side against measuring sensors (51 or 52) and that the movements of the measuring sensors (44, 45 or 51, 52) can be routed further to a computer.

4. A device in accordance with claim 2 or 3, *characterized in that,* the transporting and positioning frame (19) is equipped with a part (25) which has a cardan joint (24) whereby the part (25) is equipped with several buffer elements (21, 22 and 23) in particular arranged at the corner points of a triangle on the side which accomodates the door, which are positioned against the outer face of the door (11) and that the part (25) is correlated to a frame which can be adjusted in three planes by means of piston cylinder units (27, 28, 29) in each case in a limited amount.

5. A device in accordance with claim 4, *charac-*

terized in that the frame with the part (25) can be adjusted through a limited angle, through at least one horizontal axis in two opposing directions.

6. A device in accordance with claim 2 or one of the following, *characterised in that,* the frame is to be correlated to at least one compression fitting which is to operate by means of a piston cylinder unit (57 or 58) against the fastener (16) of the pertinent hinge (14).

## Revendications

1. Procédé de positionnement et de fixation de corps (11) d'assez grande surface dans l'espace contre au moins un autre corps (1), en particulier de positionnement suivi de fixation de pièces (11) contre une carrosserie automobile (1), le corps d'assez grande surface (11) étant approché de l'autre corps (1) et la position du corps (11) par rapport au corps (1) étant déterminée par au moins un doigt d'espacement (32) pendant une partie de ce mouvement, le corps d'assez grande surface (11) continuant de se déplacer selon 3 degrés de liberté en direction de l'autre corps (1) jusqu'au contact physique et déterminant ensuite à deux plans différents la position dans l'espace d'une pièce en un tenant (10) du corps d'assez grande surface (11), ce dernier étant, palpé et les valeurs obtenues par palpage étant communiquées à un calculateur aux fins d'exécution du travail de fixation du corps d'assez grande surface (11) et/ou de la pièce en un seul tenant (14) qui lui est affixée, un robot industriel (par ex. 3, 4) reliant ensuite la pièce concernée (16) avec l'autre corps, *caractérisé en ce que*

a) l'une des pièces est une pièce de carrosserie automobile soulevée jusqu'à sa position en hauteur est saisie par des capteurs (33, 34);
b) le corps d'assez grande surface est une portière (11) de véhicule dotée de charnières (14) situées à deux niveaux différent, superposées et fixées en particulier par soudure, déplacée contre l'orifice prévu jusqu'à ce que la portière (11) se déplaçant solidaire du doigt d'espacement (32) vienne buter contre un endroit prévu à cet effet, contre par ex. les longerons d'une carrosserie (1) de véhicule, une articulation permettant que la pièce (19) servant de logement et de fixation de la carrosserie (1) puisse flotter dans toutes les directions dans une plage limitée, la portière (11) de véhicule approchée dans une certaine mesure en flottant tentant d'épouser le contour (26) de la carrosserie jusqu'à ce que le contour extérieur de la portière (11) s'insère exactement dans le contour extérieur (26) de la carrosserie (1), un mouvement d'ajustage par rapport à la carrosserie (1) en tant qu'ajustage de précision se déroule selon un plan situé dans le sens du mouvement transporteur (E - F) orthogonalement à la carrosserie (1), l'ajustage de précision se poursuivant selon le plan vertical et un autre ajustage de précision parallèlement à la carrosserie (1) ayant lieu;
c) la superposition verticale des charnières (14) est palpée par des doigts palpeurs (40, 41) et les valeurs palpées sont communiquées à un calculateur, des pièces (59, 60) étant appliquées contre la portière (1) avant, pendant et après l'opération de palpage métrologique pour empêcher le déplacement de celle-ci (1) qui n'est pas encore soudée;
d) simultanément au palpage de la hauteur des charnières (14) est palpé en plus un plan de préférence vertical - la face extérieure de la paroi verticale de la pièce de charnière concernée (16) - par deux palpeurs (46, 47) distants l'un de l'autre pour déterminer l'angle formé entre cette pièce de charnière (16) et la carrosserie (1) et communiquer de même les résultats au calculateur;
e) à l'intérieur de certaines tolérances définies suivant c) et d) le calculateur donne un ordre de soudage à un ou plusieurs robots soudeurs (3, 4 et 5, 6) situés de chaque côté de la carrosserie (1), ces robots soudeurs (3, 4 et 5, 6) confectionnant chacun au moins un cordon de soudure supérieur et au moins un cordon de soudure inférieur contre chaque patte (16) de chaque charnière (14) de chaque porte (11);
f) avant le commencement de l'opération de soudage les doigts palpeurs (40, 41 et 46, 47) sont éloignés de la zone de soudage et placés dans une position protectrice.
g) après le soudage les dispositifs de soudage sont nettoyés automatiquement par un système mécanique et/ou par du gaz sous pression, de l'air comprimé huilé par exemple;
h) après le soudage la carrosserie (1) est abaissée à nouveau sur le convoyeur linéaire séquencé ou sur le convoyeur sans fin conçu comme un convoyeur linéaire combiné levage/abaissement et poursuit son avance séquencé.

2. Dispositif d'exécution du procédé selon la revendication 1, le corps d'une certaine surface (11) pouvant être approché d'une carrosserie (1) et sa position par rapport à la carrosserie (1) étant déterminable au moins par un doigt d'espacement (32) pendant une partie du mouvement d'approche, le corps (11) étant déplaçable jusqu'à la carrosserie, le mouvement pouvant se poursuivre jusqu'au contact physique avec la carrosserie (1), sa position dans l'espace étant ensuite déterminable selon deux plans au niveau d'une pièce (10) d'un seul tenant du corps d'assez grande surface (11), en particulier palpable, le corps d'assez grande surface (11) étant approchable de la carrosserie (1) selon trois degrés de liberté, les valeurs palpées étant communicables à un calculateur aux fins d'exécution de l'opération de fixation du corps d'assez grande surface (11) et/ou la pièce d'un tenant (14) qui lui est reliée, un robot industriel (3, 4 par ex.) pouvant ensuite relier la pièce intéressée (16) avec la carrosserie, *caractérisé en ce que*

a) par un mécanisme d'insertion motorisé (9) les portières de véhicule (11) sont approchables d'un convoyeur à magasin (10) en forme de convoyeur sans fin, ce dernier (10) présentant plusieurs magasins (12) distants les uns des autres et disposés dans le sens du convoyage et reliés les uns aux autres par un élément tracteur sans fin motorisé, les magasins (12) étant ouverts vers le haut et pouvant recevoir déposées dedans les portières de véhicule (11);

b) au niveau du toit un robot industriel (20) trois axes est installé commandant un cadre de transport et de positionnement (19), le soulève et l'abaisse en particulier selon le plan vertical (V et K) et le fait pivoter d'au moins 180 degrés autour d'un axe vertical (35);

c) le châssis de transport et de positionnement (19) présente plusieurs éléments-tampons (21, 22, 23) et/ou plusieurs ventouses à dépression (55, 56) s'appliquant sur toute la surface de la portière (11);

d) le châssis de transport et de positionnement (19) présente au moins un dispositif de retenue de la portière (11) devant être extraite d'un magasin (12) du convoyeur à magasins (1) et au moins un doigt d'espacement entrant en contact tactile avec une partie de la carrosserie;

e) le châssis de transport et de positionnement présente à mi-hauteur une articulation (24) permettant au châssis de transport et de positionnement (19) de retenir la portière (11) saisie et flottante par le biais de l'articulation, et de l'approcher flottant dans cette position contre l'orifice de la carrosserie (1) à équiper de la portière concernée (11);

f) le châssis de transport et de positionnement (19) présente au moins deux pièces d'appui mobiles (59, 60) motorisées par exemple par la poussée de l'air comprimé et espacés sur le plan vertical l'un au-dessus de l'autre, qui appuient chacune une patte (16) de charnières (14) disposées espacées l'une de l'autre, par exemple soudées d'un seul tenant contre la face intérieure de la portière concernée (11), contre la surface de la carrosserie (11), un longeron par exemple;

g) à distance à côté du convoyeur à magasin (10) se trouve une tête de mesure motorisée (37) par ex. par la poussée de l'air comprimé, sortable et rentable, palpant la plage de hauteur des pattes (16) de charnière concernées et l'inclinaison angulaire par rapport à la pièce de carrosserie contre laquelle la patte (16) doit être soudée selon un plan vertical par rapport à ladite pièce;

h) à ce dispositif est affecté un calculateur qui compare les valeurs palpées aux deux niveaux superposés avec des valeurs-limites définies et pilote ensuite les pièces du dispositif, en particulier des robots soudeurs (3, 4 et 5, 6).

3. Dispositif selon revendication 2, *caractérisé en ce que* la tête de mesure (37) présente deux plaques de palpage espacées agencées parallèlement l'une à l'autre (38, 39) présentant en leurs extrémités libres un doigt palpeur (40 et 41) chacune palpant dans le sens vertical la largeur (hauteur) de la patte (16) de charnière (14) à souder, et en ce que la tête de mesure (37) hormis les deux plaques palpeuses (38, 39) espacées agencées parallèlement l'une à l'autre présentent d'autres palpeurs (46, 47) aux surfaces externes arrondies (49, 50) guidables jusque contre la surface de la patte (16) de la charnière (14) regardant vers l'extérieur, une butée (42 et 43) étant affectée à chaque plaque palpeuse, lesquelles surfaces s'appuient sans fixation par un côté contre les capteurs de mesure (44 et 45), en ce qu'aussi les palpeurs (46 et 47) sont en appui sans fixation contre les capteurs de mesure (51 et 52) et en ce que les mouvements des capteurs de mesure (44, 45 et 51, 52) sont communicables à un calculateur.

4. Dispositif selon revendication 2 ou 3, caractérisé en ce que le cadre de transport et de positionnement (19) présente une pièce (25) équipée d'une articulation (24), la pièce (25) possédant plusieurs éléments-tampons (21, 22 et 23), trois en particuliers disposés aux extrémités d'un triangle sur le côté recevant la portière (11) et qui viennent s'appliquer contre la surface extérieure de la portière, et en ce que la pièce (25) est montée contre un cadre mobile selon trois plans sous l'effet d'unités à piston et cylindre (27, 28, 29) et selon une course limitée selon chaque plan.

5. Dispositif selon revendication 4, caractérisée en ce que le cadre est mobile et inclinable avec la pièce (25) au moins selon l'axe horizontal dans deux directions opposées selon une course angulaire limitée.

6. Dispositif selon revendication 2 ou l'une des revendications suivantes, *caractérisé en ce qu'*au cadre est affecté au moins une pièce d'appui agissant contre la patte (16) de la charnière concernée (14) sous l'effet d'une unité à piston et cylindre (57 et 58).